# EUROPEAN PATENT APPLICATION

(11) **EP 2 827 674 A1**
(43) Date of publication of application: **21.01.2015**
(21) Application number: 13769456.8
(22) Date of filing: 20.02.2013
(51) Int. Cl.: H04W 74/08

(54) **WIRELESS FRAME SENDING METHOD AND DEVICE**

(30) Priority: 31.03.2012 CN 201210101901
(71) Applicant: ZTE Corporation, Shenzhen, Guangdong 518057 (CN)
(72) Inventor: LV, Kaiying, Shenzhen, Guangdong 518057 (CN); SUN, Bo, Shenzhen, Guangdong 518057 (CN); LI, Nan, Shenzhen, Guangdong 518057 (CN); JIANG, Jing, Shenzhen, Guangdong 518057 (CN); XING, Weimin, Shenzhen, Guangdong 518057 (CN); HAN, Zhiqiang, Shenzhen, Guangdong 518057 (CN)
(74) Representative: Deambrogi, Edgardo
(86) International application number: PCT/CN2013/071706
(87) International publication number: WO 2013/143365

(57) **Abstract**

Provided are a radio frame sending method and apparatus. In the method, when entering an awake state from a doze state, a station selects a pre-defined access category or an access category which is pre-negotiated with a centre station to contend for a wireless channel. Afterwards, the station sends a radio frame to the centre station via the wireless channel obtained through the contention, and then notifies the centre station to send buffered data to the station. The method and apparatus can be applied to flexibly and dynamically regulate an access category used for contending for a wireless channel when a station sends a radio frame which is used for notifying a centre station to send buffered data to the station.

## Description

### Technical Field

The present invention relates to the field of communications, in particular to a radio frame sending method and apparatus.

### Background

At present, in the field of wireless networks, the wireless local area network (WLAN) has a fast development, and there is an increasing demand for the application of the WLAN. In the Institute for Electrical and Electronic Engineers (IEEE) industry standard 802.11 group, a series of general WLAN technologies with the most common standard such as 802.11a, 802.11b and 802.11g are defined one after another, and then other task groups have appeared successively, devoting themselves to developing specifications relating to the improvement of the existing 802.11 technologies. For example, 802.11ah task group mainly specifies the utilization of the resources regarding unlicensed frequency bands under 1 GHz, so as to support new network applications such as an intelligent power grid, a sensor network and cellular network load sharing.

In 802.11, one access point (AP) and a plurality of stations (STAs) associated with the AP constitute one basis service set (BSS). The most basic operation mode of 802.11 is to enable, using a carrier sense multiple access with collision avoidance (CSMA/CA) mechanism, a plurality of stations to share a wireless channel through contention. An enhanced distributed channel access (EDCA) is an enhanced operation mode, which uses the CSMA/CA mechanism to enable a plurality of queues with different priorities to share a wireless channel through contention, and appoint a transmission opportunity (TXOP).

In a new WLAN application scene defined by the 802.11ah task group, there are numerous applications requiring the support for the transmission of a large number of users, such as intelligent power grid metre reading, a sensor network, remote control and measure, public security, medical monitoring and other typical instances. Moreover, in an intelligent power grid scene, a BSS is required to be able to support 6000 stations at most, and the system needs to support a large number of stations to report data regularly or irregularly. In these applications, the stations are generally powered by batteries, and it is generally required that the batteries need not to be changed for a long time. Therefore, these stations have a very high requirement for power saving compared with stations in the conventional WLAN system. 802.11 supports a power save mode operation. In normal situations, the station works in an active mode. If the station enters a power save mode, then the station alternately works in two states: an awake state, i.e. powered on for working; and a doze state, i.e. not performing receiving and sending operations.

In the related art, an access point (AP) sends traffic indication MAP (TIM) to a station in a power save mode when the station is in an awake state, for indicating to (or notifying) a non-AP station whether there is buffered data to be sent of a non-AP station. When the non-AP station wakes and hears the above-mentioned traffic indication MAP, if learning that there is buffered data to be sent thereto, then the non-AP station uses a CSMA/CA channel access mode for contending for a channel and sends a power save mode-service enquiry request (PS-POLL) frame to the AP. Since a plurality of non-AP stations may contend for a channel at the same time and thus causing collision, the PS-POLL frame contends for a channel with a relatively low access priority (Access category-best effort, short as AC-BE), i.e. uses a relatively large contention window to perform random backoff and then accesses a channel, thus avoiding the collision due to contending for a channel at the same time after a plurality of non-AP stations receive the traffic indication MAP.

For the new application scene in 802.11ah, such as an intelligent electric metre or sensor network application, the station needs to further improve the power save capability. Therefore, a longer doze time may be selected rather than waking up at a regular time for monitoring traffic indication MAP sent by an AP. In addition, a radio frame may be actively sent to enquiry the access point (AP) whether there is data buffered in the station after the station wakes up, thus further lowering the power consumption of the station. For such a working mode, since a non-AP station actively wakes up randomly, the possibility of a plurality of non-AP stations to contend for a channel and to actively send an enquiry request at the same time is significantly reduced, and the probability of collision will decrease much with respect to the conventional power save working mode. In addition, in the related art, the station may also monitor a TIM message, and determines a time slot thereof for sending PS-POLL according to a relative position of the traffic indication information in the TIM message. In this way, the possibility of a plurality of non-AP stations to contend for a channel at the same time after monitoring that there is traffic indication information thereof can be reduced, and the probability of collision also will decrease much with respect to the conventional power save working mode. In the above-mentioned method, if the existing access priority is used for contending for a wireless channel, the station may not be able to contend for a wireless channel fast for performing data transmission, or may enter a doze state again after confirming that there is no data, which is not beneficial to a station having a high requirement on power saving to save power.

### Summary

With regard to the problem of how to flexibly and dynamically regulate an access category used by a station for contending for a wireless channel to send a radio frame which is used for notifying a centre station to send buffered data to the station, the embodiments of the present invention provide a radio frame sending method and apparatus to at least solve the above-mentioned problem.

According to an embodiment of the present invention, a radio frame sending method is provided. In the method, when entering an awake state from a doze state, a station selects a pre-defined access category or an access category which is pre-negotiated with a centre station to contend for a wireless channel; and the station sends a radio frame to the centre station via the wireless channel obtained through the contention, and notifies the centre station to send buffered data to the station.

In the described embodiment, the station applies a following power save working mode: an active enquiry mode or a regular monitoring mode, wherein if the power save working mode of the station is the active enquiry mode, the station, when entering the awake state from the doze state, actively sends the radio frame to the centre station; and if the power save working mode of the station is the regular monitoring mode, the station, when entering the awake state from the doze state, monitors traffic indication information sent by the centre station, and if the traffic indication information indicates to the station that there is data to be sent, then the station sends the radio frame to the centre station.

In the described embodiment, before selecting the pre-defined access category or the access category which is pre-negotiated with the centre station to contend for the wireless channel, the method further includes: the station negotiating an access category with the centre station.

In the described embodiment, the station negotiating the access category with the centre station includes one of the following: the station indicating to the centre station an access category used for sending the radio frame; the station requesting from the centre station a confirmation for an access category used for sending the radio frame, and the centre station confirming the access category used for sending the radio frame by the station; the centre station indicating to the station an access category for sending the radio frame; and the station negotiating a power save working mode of the station with the centre station, and the station using an access category corresponding to the negotiated power save working mode.

In the described embodiment, when each power save working mode corresponds to a plurality of access categories, after the station negotiates the power save working mode of the station with the centre station, the method further includes: the station negotiating an access category used under the power save working mode with the centre station.

In the described embodiment, the station sending the radio frame to the centre station via the wireless channel obtained through the contention includes: the station contending for a wireless channel according to an inter-frame space parameter and contention window parameters corresponding to the access category, wherein the contention window parameters include: a minimum contention window parameter and a maximum contention window parameter.

In the described embodiment, when each access category corresponds to a plurality of inter-frame space parameters and/or multiple sets of the contention window parameters, the station negotiating the access category with the centre station further includes: the station and the centre station determining an inter-frame space parameter and/or contention window parameters used by the negotiated access category.

In the described embodiment, a minimum contention window parameter corresponding to the pre-defined access category is not greater than minimum contention window parameters used when contending for a channel for sending other radio frames, and/or, an inter-frame space parameter corresponding to the pre-defined access category is not greater than inter-frame space parameters used for sending other radio frames.

In the described embodiment, a minimum contention window parameter of an access category used when a station in the active enquiry mode contends for a channel for sending the radio frame to the centre station is not greater than a minimum contention window parameter of an access category used when a station in the regular monitoring mode contends for a channel for sending the radio frame to the centre station.

In the described embodiment, an inter-frame space parameter of an access category used when a station in the active enquiry mode contends for a channel for sending the radio frame to the centre station is not greater than an inter-frame space parameter of an access category used when a station in the regular monitoring mode contends for a channel for sending the radio frame to the centre station.

In the described embodiment, after the station sends the radio frame to the centre station, the method further includes: the station judging whether a response radio frame is received from the centre station within a pre-defined time interval; if the response radio frame is not received within the pre-defined time interval, then increasing the contention window parameters, and sending the radio frame again after random backoff is conducted, until a predetermined number of retransmission times is reached; and if the response radio frame is not received after reaching the predetermined number of retransmission times, then entering the doze state; or, if the station is in an active enquiry mode, then the station turning into a regular monitoring mode and starting to monitor traffic indication information sent by the centre station, and if the traffic indication information indicates to the station that there is data to be sent, then the station selecting the pre-defined access category or the access category which is pre-negotiated with the centre station to contend for the wireless channel, and sending a radio frame to the centre station via the wireless channel obtained through contention.

According to another embodiment of the present invention, a radio frame sending apparatus located in a station is provided. The radio frame sending apparatus includes: a selection component, configured to, when the station enters an awake state from a doze state, select a pre-defined access category or an access category which is pre-negotiated with a centre station to contend for a wireless channel; and a sending component, configured to send a radio frame to the centre station via the wireless channel obtained through contention, and notify the centre station to send buffered data to the station.

In the described embodiment, the station applies a following power save working mode: an active enquiry mode or a regular monitoring mode, wherein if the power save working mode of the station is the active enquiry mode, when entering the awake state from the doze state, the sending component actively sends the radio frame to the centre station; and if the power save working mode of the station is the regular monitoring mode, the station, when entering the awake state from the doze state, monitors traffic indication information sent by the centre station, and if the traffic indication information indicates to the station that there is data to be sent, then the sending component sends the radio frame to the centre station.

In the described embodiment, the apparatus further includes: a negotiation component, configured to negotiate an access category with the centre station.

In the described embodiment, the negotiation component is configured to negotiate an access category with the centre station according to one of the following manners: indicating to the centre station an access category used for sending the radio frame; requesting from the centre station a confirmation for an access category used for sending the radio frame, and the centre station confirming the access category used for sending the radio frame by the station; receiving an access category for sending the radio frame indicated by the centre station to the station; and negotiating a power save working mode of the station with the centre station, and using an access category corresponding to the negotiated power save working mode.

In the described embodiment, when each power save working mode corresponds to a plurality of access categories, the negotiation component is further configured to, after the station negotiates the power save working mode of the station with the centre station, negotiate an access category used under the power save working mode with the centre station.

In the described embodiment, the selection component is configured to contend for a wireless channel according to the following manner: contending for a wireless channel according to an inter-frame space parameter and contention window parameters corresponding to the access category, wherein the contention window parameters include: a minimum contention window parameter and a maximum contention window parameter.

In the described embodiment, when each access category corresponds to a plurality of inter-frame space parameters and/or multiple sets of the contention window parameters, the negotiation component is further configured to determine, together with the centre station, an inter-frame space parameter and/or contention window parameters used by the negotiated access category.

In the described embodiment, a minimum contention window parameter corresponding to the pre-defined access category is not greater than minimum contention window parameters used when contending for a channel for sending other radio frames, and/or, an inter-frame space parameter corresponding to the pre-defined access category is not greater than inter-frame space parameters used for sending other radio frames.

In the described embodiment, a minimum contention window parameter of an access category used by the selection component for contending for a wireless channel when the station is in the active enquiry mode is not greater than a minimum contention window parameter of an access category used by the selection component for contending for a wireless channel when the station is in the regular monitoring mode.

In the described embodiment, an inter-frame space parameter of an access category used by the selection component for contending for a wireless channel when the station is in the active enquiry mode is not greater than an inter-frame space parameter of an access category used by the selection component for contending for a wireless channel when the station is in the regular monitoring mode.

When entering an awake state from a doze state, a station selects a pre-defined access category or an access category which is pre-negotiated with a centre station to contend for a wireless channel, sends a radio frame to the centre station via the wireless channel obtained through contention, and notifies the centre station to send buffered data to the station. The embodiments of the present invention can be applied to flexibly and dynamically regulate an access category used for contending for a wireless channel when a station sends a radio frame which is used for notifying a centre station to send buffered data to the station.

### Brief description of the drawings

Drawings, provided for further understanding of the present invention and forming a part of the specification, are used to explain the present invention together with embodiments of the present invention rather than to limit the present invention. In the drawings:
Fig. 1 is a flowchart of a radio frame sending method according to an embodiment of the present invention;
Fig. 2 is a schematic diagram of radio frame sending according to embodiment IV of the present invention;
Fig. 3 is a schematic diagram of radio frame retransmission according to embodiment IV of the present invention;
Fig. 4 is a schematic diagram of a radio frame sending apparatus according to an embodiment of the present invention; and
Fig. 5 is a schematic diagram of a preferred a radio frame sending apparatus according to an embodiment of the present invention.

### Detailed Description of the Embodiments

The present invention is described below with reference to the accompanying drawings and embodiments in detail. Note that, the embodiments of the present invention and the features of the embodiments can be combined with each other if there is no conflict.

### Embodiment I

According to an embodiment of the present invention, a radio frame sending method is provided. After entering an awake state from a doze state, a station selects a pre-defined access category or an access category which is pre-negotiated with a centre station to contend for a wireless channel, sends to the centre station via the wireless channel obtained through contention a radio frame which notifies the centre station to send buffered data to the station, such that the station can flexibly and dynamically regulate an access category used for sending the radio frame.

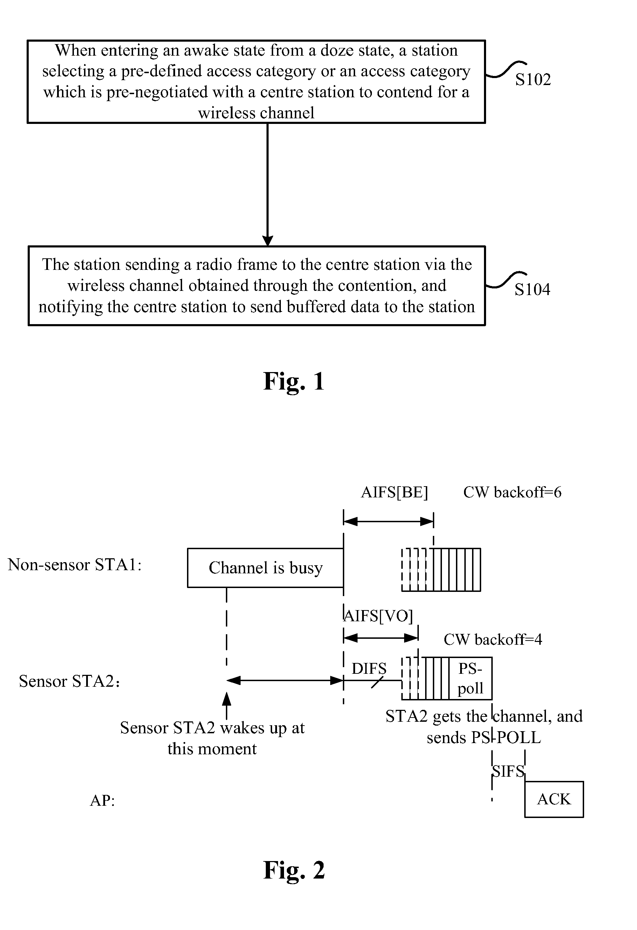

Fig. 1 is a flowchart of a radio frame sending method according to an embodiment of the present invention. As shown in Fig. 1, the method may include the following several steps (step S102-step S104).

Step S102, when entering an awake state from a doze state, a station selects a pre-defined access category or an access category which is pre-negotiated with a centre station to contend for a wireless channel.

Step S104, the station sends a radio frame to the centre station via the wireless channel obtained through contention, and notifies the centre station to send buffered data to the station.

After entering an awake state from a doze state, a station selects a pre-defined access category or an access category which is pre-negotiated with a centre station to contend for a wireless channel, sends a radio frame to the centre station via the wireless channel obtained through contention, and notifies the centre station to send buffered data to the station. The embodiment of the present invention can be applied to flexibly and dynamically regulate an access category used for contending for a wireless channel when a station sends a radio frame which is used for notifying a centre station to send buffered data to the station.

In an example embodiment of the present invention, before the station selects the pre-defined access category or the access category which is pre-negotiated with a centre station to contend for a wireless channel, the station may negotiate an access category with the centre station. In an example embodiment, the station negotiating an access category with the centre station includes but is not limited to one of the following: the station indicates to the centre station an access category used for sending a radio frame which is used for notifying the centre station to send buffered data to the station, for example, the station indicates an access category for the station to send a radio frame in an association request. Alternatively, the station may request from the centre station a confirmation for an access category for sending a radio frame which is used for notifying the centre station to send buffered data to the station, and the centre station confirms the access category for the station to send the radio frame which is used for notifying the centre station to send buffered data to the station, for example, the station indicates an access category for the station to send the above-mentioned radio frame in an association request, and the centre station confirms the access category for the station to send the above-mentioned radio frame in an association response. Alternatively, the centre station may indicate to the station an access category for sending the radio frame, for example, the centre station indicates to the station an access category for sending the above-mentioned radio frame by carrying a beacon radio frame of system information.

Furthermore, the station may also negotiate a power save working mode of the station with the centre station, and the station uses an access category corresponding to the negotiated power save working mode. In an example embodiment, when each power save working mode corresponds to a plurality of access categories, after the station negotiates a power save working mode of the station with the centre station, the station may also negotiate with the centre station an access category for sending a radio frame which is used for notifying the centre station to send buffered data to the station used under the power save working mode determined through negotiation.

In practical applications, the station may support two different power save working modes. The first is a regular monitoring mode (a power save mode), i.e. after entering a doze state, the station automatically enters an awake state, and monitors a radio frame sent by the centre station (e.g. a beacon frame (Beacon) containing traffic indication MAP (TIM)). If the TIM information indicated by the centre station indicates to the station that there is buffered data to be sent, then the station sends a radio frame (e.g. a service paging radio frame PS-POLL) to the centre station to notify the centre station to send buffered data thereto. The second is an active enquiry mode (an enhanced power save mode), then the station may have a longer doze without monitoring a radio frame (a Beacon frame) sent by the centre station, and actively sends a radio frame (e.g. a service paging radio frame PS-POLL) to the centre station after entering the awake state, and notifies the centre station to send buffered data thereto. If the centre station has buffered data of the station, then the centre station may send to the station an acknowledgement frame indicating that there is buffered data or directly send the buffered data to the station. If the centre station does not have buffered data of the station, then the centre station sends to the station an acknowledgement frame and indicates that there is no buffered data. The processing procedures of the above-mentioned two doze modes are described below respectively.

For the regular monitoring mode, after entering an awake state from a doze station, the station monitors traffic indication MAP (TIM) sent by the centre station, which contains traffic indication MAP for a plurality of stations. If the traffic indication MAP is monitored, and the traffic indication MAP indicates that the centre station has buffered data to be sent of the sending station, the station sends to the centre station a radio frame which is used for notifying the centre station to send data. At this moment, since the centre station may send traffic indication MAP to a plurality of stations in the regular monitoring mode, then a plurality of stations will contend for a wireless channel at the same time to send to the centre station a radio frame which is used for notifying the centre station to send buffered data to the stations, thus resulting in collision. In order to reduce collision, the station contends for a wireless channel according to a relatively low access category (such as an access category-best effort access category, AC-BE) set by the system for the radio frame. Since the values of inter-frame space and contention window parameters corresponding to the access category are large, the stations participating in the contention randomly contend for a channel in a relatively large time interval, thus reducing collision.

For the active enquiry mode, the station does not monitor a radio frame (a Beacon frame) sent by the centre station, and after entering an awake state from a doze state, the station actively sends to the centre station a radio frame which is used for notifying the centre station to send data. The stations in the mode randomly wake up to contend for a wireless channel to send radio frames to the centre station which are used for notifying the centre station to send buffered data to the stations. The probability of collision in the active enquiry mode is smaller than that in the regular monitoring mode. The station contends for a wireless channel according to an access category set by the system for sending the above-mentioned radio frame in this mode or according to an access category negotiated with the centre station. The access category in the active enquiry mode may be higher than that in the regular monitoring mode, i.e. the values of inter-frame space or contention window parameters corresponding to the access category in the active enquiry mode may be smaller than the values in the regular monitoring mode, such that the stations participating in the contention acquire a wireless channel as soon as possible after relatively short random backoff, thus achieving the purpose of saving power.

Therefore, in an example embodiment of the present invention, when sending a radio frame which is used for notifying a centre station to send data to a station, the station may select, according to a power save working mode, a corresponding access category set by the system. When the station works in the active enquiry mode, a relatively high or the highest access category is used for contending for a wireless channel, and sends a radio frame via the wireless channel obtained through contention. By the present example embodiment, a station working in the active enquiry mode acquires a wireless channel as soon as possible by using a high access category after entering an awake state and sends the radio frame, so that the station avoids a relatively long random backoff process, thus saving the electric energy of the station.

In an example embodiment of the present invention, after a station working in the active enquiry mode sends to a centre station a radio frame which is used for notifying the centre station to send data to the station, whether a response radio frame is received from the centre receiving station within a pre-defined time interval can be judged. If the response radio frame is not received within the pre-defined time interval, then the contention window parameters are increased and after performing random backoff, the radio frame is sent again, until reaching a predetermined number of retransmission times. If the response radio frame is not received after reaching the predetermined number of retransmission times, an awake state is kept and the regular monitoring working mode is turned to so as to monitor a radio frame sent by the station (such as traffic indication MAP (TIM)). If the station has monitored traffic indication MAP sent by the centre station, and the traffic indication MAP indicates that the centre station has buffered data to be sent of the station, then the station sends the radio frame according to an access category for sending a radio frame which is used for notifying the centre station to send data to the station which is set by the system and corresponds to the regular monitoring working mode. If the response radio frame is not received after reaching the predetermined number of retransmission times, the station may also enter the doze state again.

In an example embodiment of the present invention, in order to save electric energy of a station, the station may send a radio frame to a centre station fast to enquire whether there is data to be sent of the sending node. If there is data to be sent of the node, then the station can quickly receive the data to be sent. If there is not data to be sent of the node, the station may enter a doze state again fast. Therefore, when a radio frame to be sent is used for querying whether the centre station has data to be sent of the station, the station may succeed in contending for a wireless channel faster according to a higher pre-defined access category so as to interact with the centre station, thus saving the electric energy of the station. Furthermore, the selected access category may be the highest access category in pre-defined access categories so as to save the electric energy of the station at the maximum.

After selecting a corresponding access category set by the system according to a power save working mode, the station uses the selected access category to contend for a wireless channel, and sends a radio frame to the centre station via the wireless channel obtained through contention. In the embodiments of the present invention, the higher the access category for contending for a wireless channel, the smaller the corresponding inter-frame space and contention window parameters, and the station uses inter-frame space and contention window parameters corresponding to the selected access category to contend for a wireless channel.

In an example embodiment of the present invention, a minimum contention window parameter corresponding to the pre-defined access category is not greater than minimum contention window parameters used when contending for a channel for sending other radio frames, and/or, an inter-frame space parameter corresponding to the pre-defined access category is not greater than inter-frame space parameters used for sending other radio frames. In an example embodiment, a minimum contention window parameter of an access category used when the station in the active enquiry mode contends for a channel for sending the above-mentioned radio frame to the centre station is not greater than a minimum contention window parameter of an access category used when the station in the regular monitoring mode contends for a channel for sending the radio frame to the centre station. Accordingly, an inter-frame space parameter of an access category used when the station in the active enquiry mode contends for a channel for sending the above-mentioned radio frame to the centre station is not greater than an inter-frame space parameter of an access category used when a station in the regular monitoring mode contends for a channel for sending the radio frame to the centre station.

In practical applications, the station may support two power save working modes at the same time, and may switch between the two power save working modes as required. When the station is in the regular monitoring mode, in order to avoid the case where a plurality of sending stations send radio frames which are used for notifying the centre station to send data to the stations at the same time thus causing collision, the system sets a relatively low access category. When the station switches to the active enquiry mode, since the situation where stations send radio frames at the same time will be reduced, the probability for generating collision will also be reduced, therefore, a higher access category is set by the system so as to enable the station to contend for a wireless channel fast, which achieves the purpose of saving the electric energy of the sending node. Similarly, after switching from the active enquiry mode to the regular monitoring mode, the station follows a lower access category set by the system so as to reduce the collision between stations, such that the station successfully contends for a wireless channel and waits for receiving data sent by the centre station.

In an example embodiment of the present invention, each access category may correspond to a plurality of the inter-frame space parameters and/or multiple sets of the contention window parameters. When negotiating an access category with a centre station, a station may further determine, together with the centre station, an inter-frame space parameter and/or contention window parameters used under the negotiated access category. In a specific implementation process, the access category may correspond to a plurality of the inter-frame space parameters and/or multiple sets of the contention window parameters, which may be several pre-defined determined values, and may also be values selected within a pre-defined value range.

### Embodiment II

As regards the problem of how to send a radio frame which is used for notifying a centre station to send data so as to improve the power save capability as well as provide a higher flexibility and controllability when a station with a high power save requirement works in an active enquiry mode, there is still no effective solution at present. According to an embodiment of the present invention, before a station sends data, the station in a power save mode and a centre station uses a negotiation mode to configure an access category of a radio frame which is used for notifying the centre station to send data in a wireless network, so as to solve the technical problem of enhancing the power save capability.

In the embodiment of the present invention, the data transmission method in a power save mode on the basis of a negotiated access category is taken as an example for illustration.

After entering an awake state from a doze state, a station contends for a wireless channel according to an access category pre-negotiated with a centre station, sends a radio frame to the centre station via the wireless channel obtained through contention, and notifies the centre station to send buffered data to the station.

In practical applications, before entering an active enquiry mode, a station may negotiate with a centre station about an access category of a radio frame which is used for notifying the centre station to send data. The station may negotiate with the centre station according to the following manner.

When sending an association request or other management frames to the centre station, the station may indicate an access category used for sending a radio frame which is used for notifying the centre station to send data, or indicate values of inter-frame space or contention window parameters corresponding to the access category.

Alternatively, when sending an association request or other management frames to the centre station, the station may request for an access category used for sending a radio frame which is used for notifying the centre station to send data. When sending an association response or other acknowledgement frames to the station, the centre station confirms an access category used for the station to send the radio frame, or negotiates values of inter-frame space or contention window parameters corresponding to the access category.

Alternatively, when sending an association request frame or other management frames to the station, the centre station may indicate to the station an access category used for sending a radio frame which is used for notifying the centre station to send data, or indicate values of inter-frame space or contention window parameters corresponding to the access category.

Alternatively, when performing frame exchange of association request and association response or frame exchange of other management frames, the station and the centre station negotiate an active enquire working mode of the station, and determine an access category used for sending a radio frame which is used for notifying the centre station to send data when the station works in the active enquiry mode, or negotiate values of inter-frame space or contention window parameters corresponding to the access category.

As regards the active enquiry mode, the station does not monitor a radio frame (e.g. a Beacon frame) sent by the centre station. After the station enters an awake state from a doze state, the station contends for a wireless channel according to a negotiated access category used for sending a radio frame which is used for notifying a centre station to send data, i.e. contends for a wireless channel according to inter-frame space or contention window parameters corresponding to the access category, and sends the radio frame via the wireless channel obtained through contention.

In an example embodiment of the present invention, a station and a centre station negotiate an access category used for sending a radio frame which is used for notifying the centre station to send data. The station may request to use the highest access category set by the system to send the radio frame. The centre station may feed back confirmation to support the access category requested to be used by the station to send the frame according to factors such as service types of the stations associated with the centre station and the number of stations. In this embodiment of the present invention, the centre station confirms to support the highest access category set by the system used by the station to send the radio frame. After entering the active enquiry working mode, the station uses a negotiated access category to contend for a wireless channel, and sends a radio frame via the wireless channel obtained through contention. By the present example embodiment, a station working in the active enquiry mode acquires a wireless channel as soon as possible with a high access category after entering an awake state and sends a radio frame which is used for notifying the centre station to send data, and thus the station may avoid a relatively long random backoff process, thus saving the electric energy of the station.

In another example embodiment of the present invention, a station and a centre station negotiate a working mode for entering active enquiry. When the station confirms that the active enquiry working mode can be entered, the station uses an access category pre-defined by the system and used for sending a radio frame which is used for notifying the centre station to send data and corresponding to the active enquiry working mode. In the present embodiment of the present invention, the access category may be the highest access category set by the system. After entering an awake state from a doze state, the station working in the active enquiry mode uses the access category to contend for a wireless channel, sends the radio frame via the wireless channel obtained through contention, and notifies the centre station to send data. In the present example embodiment, a station working in the active enquiry mode acquires a wireless channel as soon as possible with a high access category after entering an awake state and sends the radio frame, so that the station may avoid a relatively long random backoff process, thus saving the electric energy of the station.

In another example embodiment of the present invention, after a station working in the active enquiry mode sends to a centre station a radio frame, whether a response radio frame is received from the centre receiving station within a pre-defined time interval may be judged. If the response radio frame is not received within the pre-defined time interval, then the contention window parameters are increased and after performing random backoff, the radio frame is sent again, until reaching a predetermined number of retransmission times. If the response radio frame is not received after reaching the predetermined number of retransmission times, an awake state is kept and the regular monitoring working mode is turned to so as to monitor a radio frame sent by the station (such as traffic indication MAP (TIM)). If the station has monitored traffic indication MAP sent by the centre station, and the traffic indication MAP indicates that the centre station has buffered data to be sent of the station, then the station sends, according to an access category which is set by the system and used for sending a radio frame which notifies the centre station to send data to the station in the regular monitoring working mode, the above-mentioned radio frame. If the response radio frame is not received after reaching the predetermined number of retransmission times, the station may also enter the doze state again.

In an example embodiment of the present invention, in order to save electric energy of a station, the station may send a radio frame to a centre station fast to enquire whether there is data to be sent of the station. If so, then the station can quickly receive the data to be sent; and if not, the station may enter a doze state again fast. Therefore, when a radio frame to be sent is used for querying whether the centre station has data to be sent of the station, the station may contend for a wireless channel faster according to a negotiated higher pre-defined access category so as to interact with the centre station, thus saving the electric energy of the station. Furthermore, the negotiated access category may be the highest access category of access categories set by the system so as to save the electric energy of the station at the maximum.

In another example embodiment of the present invention, a centre station may also regulate an access category used by a station to send a radio frame which is used for notifying the centre station to send data according to conditions such as service characteristics of associated stations in the system currently and the number of associated stations. For example, when there are more voice services in the system, in order to guarantee the time delay requirement of the voice service, the centre station may set for the radio frame an access category which is lower than the access category of the voice service in the system. By flexibly controlling the access category of a station in an active enquiry mode, the electric energy of the station may be saved at the maximum while guaranteeing the time delay requirement of other types of services of the system such as a voice service.

### Embodiment III

As regards the problem of how to send a radio frame which is used for notifying a centre station to send data so as to improve the power save capability as well as provide a higher flexibility and controllability when a station with a high power save requirement works in a regular monitoring mode, there is still no effective solution at present. According to an embodiment of the present invention, before a station in a power save mode sends data, the station and a centre station uses a negotiation mode to configure an access category of a radio frame which is used for notifying the centre station to send data in a wireless network, so as to solve the technical problem of enhancing the power save capability.

In order to reach the above-mentioned object, in the embodiment of the present invention, the data transmission method in a power save mode on the basis of a negotiated access category is taken as an example for illustration.

After entering an awake state from a doze state, a station contends for a wireless channel according to an access category pre-negotiated with a centre station, sends a radio frame to the centre station via the wireless channel obtained through contention, and notifies the centre station to send buffered data to the station.

In practical applications, before entering a regular monitoring mode, a station may negotiate with a centre station an access category of a radio frame which is used for notifying the centre station to send data. The station may negotiate with the centre station according to the following manner.

When sending an association request or other management frames to the centre station, the station may indicate an access category used for sending a radio frame which is used for notifying the centre station to send data, or indicate values of inter-frame space or contention window parameters corresponding to the access category.

Alternatively, when sending an association request or other management frames to the centre station, the station may request for an access category used for sending a radio frame which is used for notifying the centre station to send data. When sending an association response or other acknowledgement frames to the station, the centre station confirms an access category requested to be used for the station to send the radio frame, or negotiates values of inter-frame space or contention window parameters corresponding to the access category.

Alternatively, when sending an association request frame or other management frames to the station, the centre station may indicate to the station an access category used for sending a radio frame which is used for notifying the centre station to send data; or indicate values of inter-frame space or contention window parameters corresponding to the access category.

Alternatively, when performing frame exchange of association request and association response or frame exchange of other management frames, the station and the centre station may negotiate a regular monitoring working mode of the station, and determine an access category used for sending a radio frame which is used for notifying the centre station to send data when the above-mentioned station works in the regular monitoring mode; or negotiate values of inter-frame space or contention window parameters corresponding to the access category.

As regards a station entering the regular monitoring mode, the station monitors a radio frame (e.g. a Beacon frame) sent by the centre station after entering an awake state from a doze state regularly. When monitoring that the centre station has buffered data to be sent thereto, the station contends for a wireless channel according to a negotiated access category used for sending a radio frame which is used for notifying a centre station to send data, i.e. contends for a wireless channel according to inter-frame space or contention window parameters corresponding to the access category, and sends the radio frame via the wireless channel obtained through contention.

In an example embodiment of the present invention, a station and a centre station negotiate an access category used for sending a radio frame which is used for notifying the centre station to send data. The station may request to use the highest access category set by the system to send the frame. The centre station may feed back confirmation to support the access category requested to be used by the station to send the frame according to factors such as service types of stations associated with the centre station and the number of stations. In the embodiment of the present invention, the centre station confirms to support the highest access category set by the system used by the station to send the frame. When the station monitors that the centre station has buffered data to be sent thereto, the station uses the negotiated access category to contend for a wireless channel, and sends the radio frame which is used for notifying the centre station to send data via the wireless channel obtained through contention. By the present example embodiment, a station working in the regular monitoring mode acquires a wireless channel as soon as possible with a high access category after entering an awake state and monitoring that the centre station has buffered data to be sent thereto, and sends the radio frame, so that the station may avoid a relatively long random backoff process, thus saving the electric energy of the station.

In another example embodiment of the present invention, a station and a centre station negotiate to enter a regular monitoring working mode. When the station confirms that the regular monitoring working mode can be entered, the station uses an access category corresponding to the regular monitoring working mode pre-defined by the system and used for sending a radio frame which is used for notifying the centre station to send data. In the present embodiment of the present invention, the access category may be the highest access category set by the system. After entering an awake state from a doze state, the station working in the regular monitoring mode uses, when monitoring traffic indication MAP sent by the centre station and confirming that there is buffered data thereof, the access category to contend for a wireless channel, and sends a radio frame via the wireless channel obtained through contention. By the present example embodiment, a station working in the regular monitoring mode acquires a wireless channel as soon as possible with a high access category after entering an awake state and sends the radio frame, and thus the station may avoid a relatively long random backoff process, thus saving the electric energy of the station.

In another example embodiment of the present invention, after a station working in the regular monitoring mode sends to a centre station a radio frame, whether a response radio frame is received from the centre receiving station within a pre-defined time interval can be judged. If the response radio frame is not received within the pre-defined time interval, contention window parameters are increased and after performing random backoff, the radio frame is sent again, until reaching a predetermined number of retransmission times. If the response radio frame is not received after reaching the predetermined number of retransmission times, then the doze state is entered again.

In an example embodiment of the present invention, in order to save electric energy of a station, the station may send a radio frame to a centre station fast to notify the centre station to send buffered data thereto. If so, then the station can quickly receive the data to be sent; and if not, the station may enter a doze state again fast. Therefore, when a radio frame to be sent is used for querying whether the centre station has data to be sent of the station, the station may contend for a wireless channel faster according to a negotiated higher pre-defined access category so as to interact with the centre station, thus saving the electric energy of the station. Furthermore, the negotiated access category may be the highest access category of access categories set by the system so as to save the electric energy of the station at the maximum.

In another example embodiment of the present invention, a centre station may also regulate an access category used by the above-mentioned station to send a radio frame which is used for notifying the centre station to send data according to conditions such as service characteristics of associated stations in the system currently and the number of associated stations. For example, when there are more voice services in the system, in order to guarantee the time delay requirement of the voice service, the centre station may set for the radio frame an access category which is lower than the access category of the voice service in the system. By flexibly controlling the access category of a station in an active enquiry mode, the electric energy of the station may be saved at the maximum while guaranteeing the time delay requirement of other types of services of the system such as a voice service.

### Embodiment IV

According to an embodiment of the present invention, in the case where an intelligent power grid application scene is mixed with a cellular offloading application scene, a user station (i.e. an STA) of an intelligent power grid in a BSS may select to work in a regular monitoring mode, and may also select to work in an active enquiry mode.

Fig. 2 is a schematic diagram of radio frame sending according to embodiment IV of the present invention. The method is described specifically below in combination with Fig. 2.

When a user station selects to work in the regular monitoring mode, the user station needs to wake up regularly and monitors traffic indication MAP (TIM) sent in an AP period. If monitoring that there is buffered data to be transmitted thereof indicated in the TIM, the user station uses an access category pre-defined by the system or a pre-negotiated category-best effort (AC-BE) access category to contend for a channel to send a data enquiry request radio frame (a PS-POLL frame).

When the user station selects to work in the active enquiry mode, the user station may not monitor traffic indication MAP (TIM) sent in the AP period for a long time, but actively sends a service request enquiry radio frame (such as an PS-POLL frame) or a data trigger radio frame (a trigger frame) to an access point (AP) after switching to an awake state from a long doze state. In order to meet the enhanced power save requirement, the user station uses an access category pre-defined by the system or a pre-negotiated voice service access category (access category-voice, AC-VO) to contend for a wireless channel to send this frame. The user station judges, according to a carrier detection mechanism at an arbitration interface space [access category] (AIFS[AC]) corresponding to the AC-VO access category, whether a channel is idle at the inter-frame space boundary, and performs random backoff with a minimum contention window (CWmin) parameter corresponding to the AC-VO access category, attempts to access the channel when a backoff counter reaches zero, and sends a service request enquiry frame (such as an PS-POLL frame).

The user station sends a service request enquiry PS-POLL radio frame, and after receiving the radio frame, the AP sends an acknowledge (ACK) radio frame or requests to send a radio frame (RTS) or data frame after a short inter-frame space (SIFS).

After the user station sends the PS-POLL, if a response frame sent by the AP is not received in the SIFS space, then the user station doubles the CWmin contention window parameter (ensuring to be less than a maximum contention window parameter CWmax) and performs retransmission after random backoff, until reaching a maximum retransmission number of times, and if the response radio frame sent by the AP is still not received, then the doze state is entered again.

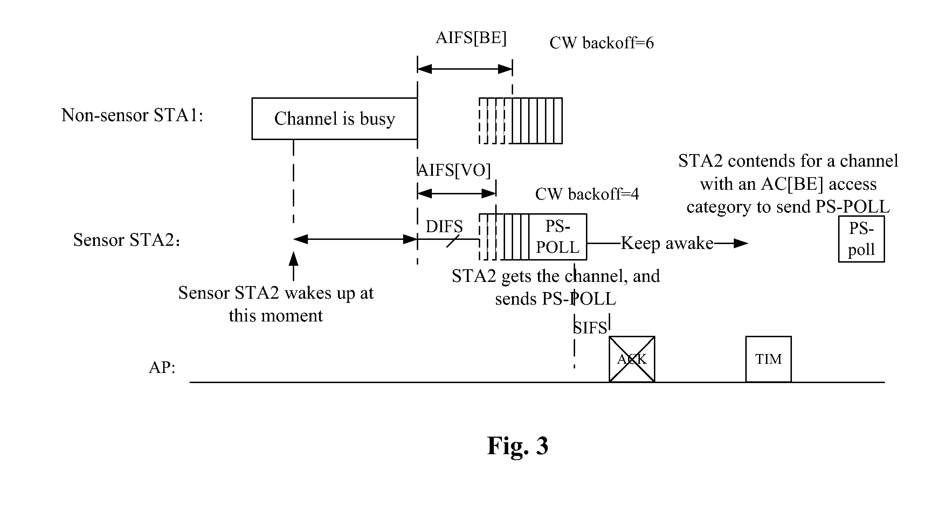

As shown in Fig. 3, after the user station sends the PS-POLL, if a response frame sent by the AP is not received in the SIFS space, then the user station doubles the CWmin contention window parameter (ensuring to be less than a maximum contention window parameter CWmax) and performs retransmission after random backoff, until reaching a maximum retransmission number of times, and if the response radio frame sent by the AP is still not received, the user station keeps a waken state and monitors traffic indication MAP (TIM) sent in the AP period. If the user station monitors the TIM information, and indicates to the user station that there is buffered data to be sent, then the user station uses an AC-BE access category to contend for a channel to send a data enquiry request radio frame PS-POLL; otherwise the user station enters the doze state again.

### Embodiment V

According to an embodiment of the present invention, in the case where an intelligent power grid application scene is mixed with a cellular offloading application scene, a user station (i.e. an STA) of an intelligent power grid in a BSS may select to work in a regular monitoring mode, and may also select to work in an active enquiry mode.

When a user station selects to work in the regular monitoring mode, the user station may need to wake up regularly and monitors traffic indication MAP (TIM) sent in an AP period. If monitoring that there is buffered data to be transmitted thereof indicated in the TIM, the user station uses an access category predefined by the system (for example, in order to meet the enhanced power save requirement, the user station uses an access category pre-defined by the system or a pre-negotiated voice service access category (access category-voice, AC-VO) to contend for a channel to send a data enquiry request radio frame (a PS-POLL frame).

When the user station selects to work in the active enquiry mode, the user station may not monitor traffic indication MAP (TIM) sent in the AP period for a long time, but actively sends a service request enquiry radio frame (such as an PS-POLL frame) or a data trigger radio frame (a trigger frame) to an access point (AP) after switching to an awake state from a long doze state. In order to meet the enhanced power save requirement, the user station uses an access category pre-defined by the system or a pre-negotiated voice service access category (access category-voice, AC-VO) to contend for a wireless channel to send this frame. The user station judges, according to a carrier detection mechanism at an arbitration interface space [access category] (AIFS[AC]) corresponding to the AC-VO access category, whether a channel is idle at the inter-frame space boundary, and performs random backoff with a minimum contention window (CWmin) parameter corresponding to the AC-VO access category, attempts to access the channel when a backoff counter reaches zero, and sends a service request enquiry frame (such as an PS-POLL frame).

The user station sends a service request enquiry PS-POLL radio frame, and after receiving the radio frame, the AP sends an acknowledge (ACK) radio frame or requests to send a radio frame (RTS) or data frame after a short inter-frame space (SIFS).

After the user station sends the PS-POLL, if a response frame sent by the AP is not received in the SIFS space, then the user station doubles the CWmin contention window parameter (ensuring to be less than a maximum contention window parameter CWmax) and performs retransmission after random backoff, until reaching a maximum retransmission number of times, and if the response radio frame sent by the AP is still not received, then the doze state is entered again.

### Embodiment VI

According to an embodiment of the present invention, in a hybrid scene including an intelligent power grid application and a cellular offloading application, a user station of an intelligent power grid in a BSS works in an active enquiry mode, and does not monitor traffic indication MAP (TIP) send in an AP period, but actively sends a service request enquiry radio frame (a PS-POLL frame) to an access point (AP) after turning to an awake state after a long doze state. The AP, after receiving the radio frame sent by the user station, sends a response frame to the user station, such as an acknowledgement (ACK) radio frame with a buffering data indication, or a channel request to send (RTS) frame, or directly sends a data frame.

In order to meet the enhanced power save requirement, the user station uses, after waking up, an access category pre-defined by the system or higher than a voice service access category (access category-voice, AC-VO) pre-negotiated (such as AC-sensor) to access a channel. The access configuration parameters such as the minimum contention window (CWmin) parameter, maximum contention window (CWmax) parameter and AIFS[AC] corresponding to the access category are smaller than or partially the same as the parameters corresponding to AC-VO. Examples are shown in the table below.

| Access category (AC) | Minimum contention window (aCWmin) | Maximum contention window (aCWmax) | AIFS number | Description |
|---|---|---|---|---|
| AC-sensor | (aCWmin + 1)/4-1 | (aCWmin + 1)/2-1 | 2 | Intelligent power grid application service, etc. |
| AC-VO | (aCWmin + 1)/4-1 | (aCWmin + 1)/2-1 | 3 | Voice-type service |
| AC-VI | (aCWmin + 1)/2-1 | aCWmin | 7 | Video-type service |
| AC-BE | aCWmin | aCWmax | 7 | Best-effort service |
| AC-BK | aCWmin | aCWmax | 10 | Background service |

The subsequent processing process is the same as embodiment V of the present invention, which will not be described again here.

### Embodiment VII

According to an embodiment of the present invention, a radio frame sending apparatus which is able to achieve the method provided by the above-mentioned embodiments of the present invention is provided.

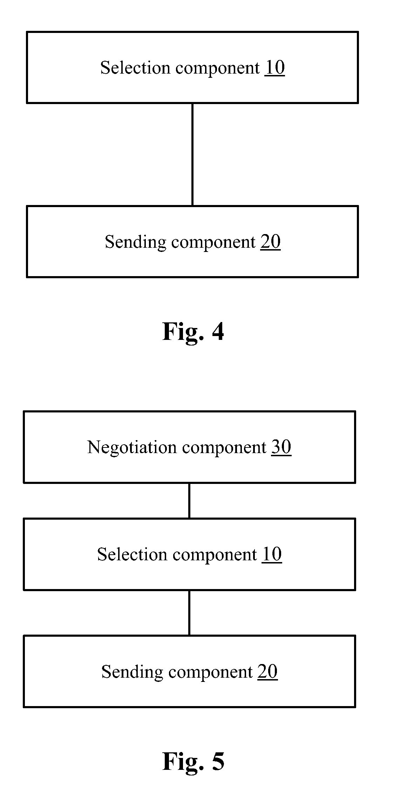

Fig. 4 is a schematic diagram of a radio frame sending apparatus according to an embodiment of the present invention. As shown in Fig. 4, the apparatus mainly includes: a selection component **10** and a sending component **20.** The selection component **10** is configured to, when the station enters an awake state from a doze state, select the pre-defined access category or the access category which is pre-negotiated with the centre station to contend for the wireless channel; and the sending component **20** is coupled to the selection component **10,** and is configured to send a radio frame to the centre station via the wireless channel obtained through contention, and notify the centre station to send buffered data to the station.

After a station enters an awake state from a doze state, the selection component **10** selects a pre-defined access category or an access category which is pre-negotiated with a centre station to contend for a wireless channel, and the sending component **20** sends a radio frame to the centre station via the wireless channel obtained through contention, and notifies the centre station to send buffered data to the station. The embodiment of the present invention can be applied to flexibly and dynamically regulate an access category used for contending for a wireless channel when a station sends a radio frame which is used for notifying a centre station to send buffered data to the station.

In an example embodiment of the present invention, as shown in Fig. 5, the above-mentioned apparatus may further include: a negotiation component **30,** coupled to the selection component **10,** and configured to negotiate an access category with the centre station. In an example embodiment, the negotiation component **30** may negotiate an access category with the centre station according to one of the following manners: the station indicates to the centre station an access category used for sending a radio frame which is provided for notifying the centre station to send buffered data to the station, for example, the station indicates an access category for the station to send a radio frame in an association request. Alternatively, the station requests confirmation of the centre station for an access category for sending the above-mentioned radio frame, and the centre station confirms the access category for sending the above-mentioned radio frame by the station. For example, the station indicates an access category for the station to send the radio frame in an association request, and the centre station confirms the access category for the station to send the radio frame in an association response. Alternatively, the centre station indicates to the station an access category for sending a radio frame which is provided for notifying the centre station to send buffered data to the station.

Furthermore, when each power save working mode corresponds to a plurality of access categories, the negotiation component **30** is further configured to, after the step of negotiating a power save working mode of the station with the centre station, negotiate an access category in the power save working mode with the centre station.

In practical applications, the sending station may support two different power save working modes. The first is a regular monitoring mode, i.e. after the station enters a doze state, automatically entering an awake state, and monitoring a radio frame sent by the centre station (e.g. a traffic indication radio frame). The second is an active enquiry mode, i.e. the sending node may have a longer doze, and actively send a radio frame to a centre station after entering an awake state to enquiry the centre station whether there is buffered data to be sent of the station.

If the station is in the active enquiry mode, when entering an awake state from a doze state, the sending component **20** actively sends to the centre station a radio frame which is provided for notifying the centre station to send buffered data to the station; and if the station is in the regular monitoring mode, when entering the awake state from the doze state, the station monitors traffic indication MAP sent by the centre station, and if the traffic indication MAP indicates to the station that there is data to be sent, then the sending component **20** sends to the centre station a radio frame which is provided for notifying the centre station to send buffered data to the station.

In an example embodiment of the present invention, the selection component **10** may contend for a wireless channel according to an inter-frame space parameter and contention window parameters corresponding to a selected access category, wherein the contention window parameters include: a minimum contention window parameter and a maximum contention window parameter. In an example embodiment, when each access category corresponds to a plurality of inter-frame space parameters and/or multiple sets of the contention window parameters, the negotiation component **30** is further configured to determine, together with the centre station, an inter-frame space parameter and/or contention window parameters used by the negotiated access category.

In another example embodiment of the present invention, a minimum contention window parameter corresponding to the pre-defined access category is not greater than minimum contention window parameters used when contending for a channel for sending other radio frames, and/or, an inter-frame space parameter corresponding to the pre-defined access category is not greater than inter-frame space parameters used for sending other radio frames. In an example embodiment, a minimum contention window parameter of an access category used by the selection component **10** for contending for a wireless channel when the station is in the active enquiry mode is not greater than a minimum contention window parameter of an access category used by the selection component **10** for contending for a wireless channel when the station is in the regular monitoring mode. Alternatively, an inter-frame space parameter of an access category used by the selection component **10** for contending for a wireless channel when the station is in the active enquiry mode is not greater than an inter-frame space parameter of an access category used by the selection component **10** for contending for a wireless channel when the station is in the regular monitoring mode.

From the description above, it can be seen that the present invention achieves the following technical effects: when entering an awake state from a doze state, a station selects a pre-defined access category or an access category which is pre-negotiated with a centre station to contend for a wireless channel, and sends a radio frame to the centre station via the wireless channel obtained through contention, and notifies the centre station to send buffered data to the station. The present invention can be applied to flexibly and dynamically regulate an access category used for contending for a wireless channel when a station sends a radio frame which is used for notifying a centre station to send buffered data to the station. Furthermore, the station may select, when actively sending the radio frame to the centre station, a relatively high access category, such that the station can contend for a wireless channel for sending a radio frame fast, thus reducing the energy consumption of the station, and meeting the energy save requirement of a station which needs an ultra-long standby time.

Obviously, those skilled in the art should know that each of the mentioned components or steps of the present invention can be realized by universal computing devices; the components or steps can be focused on single computing device, or distributed on the network formed by multiple computing devices; selectively, they can be realized by the program codes which can be executed by the computing device; thereby, the components or steps can be stored in the storage device and executed by the computing device; and under some circumstances, the shown or described steps can be executed in different orders, or can be independently manufactured as each integrated circuit component, or multiple components or steps thereof can be manufactured to be single integrated circuit component, thus to be realized. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection as defined by the appended claims of the present invention.

## Claims

1. A radio frame sending method, **characterized by** comprising:
when entering an awake state from a doze state, a station selecting a pre-defined access category or an access category which is pre-negotiated with a centre station to contend for a wireless channel; and
the station sending a radio frame to the centre station via the wireless channel obtained through the contention, and notifying the centre station to send buffered data to the station.

2. The method according to claim 1, **characterized in that** the station applies a following power save working mode: an active enquiry mode or a regular monitoring mode, wherein
if the power save working mode of the station is the active enquiry mode, the station, when entering the awake state from the doze state, actively sends the radio frame to the centre station; and
if the power save working mode of the station is the regular monitoring mode, the station, when entering the awake state from the doze state, monitors traffic indication information sent by the centre station, and if the traffic indication information indicates to the station that there is data to be sent, then the station sends the radio frame to the centre station.

3. The method according to claim 1, **characterized in that** before selecting the pre-defined access category or the access category which is pre-negotiated with the centre station to contend for the wireless channel, the method further comprises:
the station negotiating an access category with the centre station.

4. The method according to claim 3, **characterized in that** the station negotiating the access category with the centre station comprises one of the following:
the station indicating to the centre station an access category used for sending the radio frame;
the station requesting from the centre station a confirmation for an access category used for sending the radio frame, and the centre station confirming the access category used for sending the radio frame by the station;
the centre station indicating to the station an access category for sending the radio frame; and
the station negotiating a power save working mode of the station with the centre station, and the station using an access category corresponding to the negotiated power save working mode.

5. The method according to claim 4, **characterized in that** when each power save working mode corresponds to a plurality of access categories,
after the station negotiates the power save working mode of the station with the centre station, the method further comprises: the station negotiating an access category used under the power save working mode with the centre station.

6. The method according to any one of claims 1 to 5, **characterized in that** the station sending the radio frame to the centre station via the wireless channel obtained through the contention comprises:
the station contending for a wireless channel according to an inter-frame space parameter and contention window parameters corresponding to the access category, wherein the contention window parameters comprise: a minimum contention window parameter and a maximum contention window parameter.

7. The method according to claim 6, **characterized in that** when each access category corresponds to a plurality of inter-frame space parameters and/or multiple sets of the contention window parameters, the station negotiating the access category with the centre station further comprises:
the station and the centre station determining an inter-frame space parameter and/or contention window parameters used by the negotiated access category.

8. The method according to claim 6, **characterized in that** a minimum contention window parameter corresponding to the pre-defined access category is not greater than minimum contention window parameters used when contending for a channel for sending other radio frames, and/or, an inter-frame space parameter corresponding to the pre-defined access category is not greater than inter-frame space parameters used for sending other radio frames.

9. The method according to claim 6, **characterized in that** a minimum contention window parameter of an access category used when a station in the active enquiry mode contends for a channel for sending the radio frame to the centre station is not greater than a minimum contention window parameter of an access category used when a station in the regular monitoring mode contends for a channel for sending the radio frame to the centre station.

10. The method according to claim 6, **characterized in that** an inter-frame space parameter of an access category used when a station in the active enquiry mode contends for a channel for sending the radio frame to the centre station is not greater than an inter-frame space parameter of an access category used when a station in the regular monitoring mode contends for a channel for sending the radio frame to the centre station.

11. The method according to any one of claims 1 to 5, **characterized in that** after the station sends the radio frame to the centre station, the method further comprises:
the station judging whether a response radio frame is received from the centre station within a pre-defined time interval;
if the response radio frame is not received within the pre-defined time interval, then increasing the contention window parameters, and sending the radio frame again after random backoff is conducted, until a predetermined number of retransmission times is reached; and
if the response radio frame is not received after reaching the predetermined number of retransmission times, then entering the doze state; or, if the station is in an active enquiry mode, then the station turning into a regular monitoring mode and starting to monitor traffic indication information sent by the centre station, and if the traffic indication information indicates to the station that there is data to be sent, then the station selecting the pre-defined access category or the access category which is pre-negotiated with the centre station to contend for the wireless channel, and sending a radio frame to the centre station via the wireless channel obtained through contention.

12. A radio frame sending apparatus located in a station, **characterized in that** the radio frame sending apparatus comprises:
a selection component, configured to, when the station enters an awake state from a doze state, select a pre-defined access category or an access category which is pre-negotiated with a centre station to contend for a wireless channel; and
a sending component, configured to send a radio frame to the centre station via the wireless channel obtained through contention, and notify the centre station to send buffered data to the station.

13. The apparatus according to claim 12, **characterized in that** the station applies a following power save working mode: an active enquiry mode or a regular monitoring mode, wherein
if the power save working mode of the station is the active enquiry mode, when entering the awake state from the doze state, the sending component actively sends the radio frame to the centre station; and
if the power save working mode of the station is the regular monitoring mode, the station, when entering the awake state from the doze state, monitors traffic indication information sent by the centre station, and if the traffic indication information indicates to the station that there is data to be sent, then the sending component sends the radio frame to the centre station.

14. The apparatus according to claim 12, **characterized in that** the apparatus further comprises:
a negotiation component, configured to negotiate an access category with the centre station.

15. The apparatus according to claim 14, **characterized in that** the negotiation component is configured to negotiate an access category with the centre station according to one of the following manners:
indicating to the centre station an access category used for sending the radio frame;
requesting from the centre station a confirmation for an access category used for sending the radio frame, and the centre station confirming the access category used for sending the radio frame by the station;
receiving an access category for sending the radio frame indicated by the centre station to the station; and
negotiating a power save working mode of the station with the centre station, and using an access category corresponding to the negotiated power save working mode.

16. The apparatus according to claim 15, **characterized in that** when each power save working mode corresponds to a plurality of access categories,
the negotiation component is further configured to, after the station negotiates the power save working mode of the station with the centre station, negotiate an access category used under the power save working mode with the centre station.

17. The apparatus according to any one of claims 12 to 16, **characterized in that** the selection component is configured to contend for a wireless channel according to the following manner:
contending for a wireless channel according to an inter-frame space parameter and contention window parameters corresponding to the access category, wherein the contention window parameters comprise: a minimum contention window parameter and a maximum contention window parameter.

18. The apparatus according to claim 17, **characterized in that** when each access category corresponds to a plurality of inter-frame space parameters and/or multiple sets of the contention window parameters,
the negotiation component is further configured to determine, together with the centre station, an inter-frame space parameter and/or contention window parameters used by the negotiated access category.

19. The apparatus according to claim 17, **characterized in that** a minimum contention window parameter corresponding to the pre-defined access category is not greater than minimum contention window parameters used when contending for a channel for sending other radio frames, and/or, an inter-frame space parameter corresponding to the pre-defined access category is not greater than inter-frame space parameters used for sending other radio frames.

20. The apparatus according to claim 17, **characterized in that** a minimum contention window parameter of an access category used by the selection component for contending for a wireless channel when the station is in the active enquiry mode is not greater than a minimum contention window parameter of an access category used by the selection component for contending for a wireless channel when the station is in the regular monitoring mode.

21. The apparatus according to claim 17, **characterized in that** an inter-frame space parameter of an access category used by the selection component for contending for a wireless channel when the station is in the active enquiry mode is not greater than an inter-frame space parameter of an access category used by the selection component for contending for a wireless channel when the station is in the regular monitoring mode.
